# EUROPÄISCHE PATENTSCHRIFT

(11) **EP 0 744 216 B1**
(45) Veröffentlichungstag und Bekanntmachung des Hinweises auf die Patenterteilung: **11.11.1998**
(21) Anmeldenummer: 96108139.5
(22) Anmeldetag: 22.05.1996
(51) Int. Cl.: B02C 19/14, B65F 1/14

(54) **Altglas-Sammelbehälter mit Zerkleinerungsvorrichtung**
Waste glass collection container with crushing device
Container muni d'un broyeur pour la récupération de verre usage

(30) Priorität: 24.05.1995 DE 19519115
(43) Veröffentlichungstag der Anmeldung: 27.11.1996
(73) Patentinhaber: Krischke, Stefan, 71292 Friolzheim (DE)
(72) Erfinder: Krischke, Stefan, 71292 Friolzheim (DE)
(74) Vertreter: Dreiss, Fuhlendorf, Steimle & Becker, Patentanwälte

(56) Entgegenhaltungen:
- DE-A- 4 022 124
- DE-U- 9 315 201
- US-A- 5 226 606

## Beschreibung

Die vorliegende Erfindung bezieht sich auf einen Altglas-Sammelbehälter nach dem Oberbegriff des Anspruchs 1.

Aus der DE 40 22 124 A1 ist ein Altglas-Sammelbehälter bekannt gewordenen, bei der die Zerkleinerungsvorrichtung nach Art eines Mahlwerkes ausgebildet ist, das am inneren Ende des geradlinigen Einwurfschachtes als Abschluß axial angeflanscht ist. Es hat sich herausgestellt, daß diese Art Zerkleinerungsvorrichtung aufgrund des relativ hohen Energiebedarfes unwirtschaftlich ist und zu einem Maß an Zerkleinerung des Altglases führt, wie es für die Aufnahme im Sammelbehälter und den Transport nicht notwendig ist. Insbesondere für sehr schweres und dickes Glas, wie bspw. bei Sektflaschen, ist eine wirtschaftlich nicht vertretbare Robustheit der Zerkleinerungsvorrichtung gefordert.

Aus der US-A-5,226,606 ist ein gattungsgemäßer Altglascontainer bekannt geworden, bei dem das Altglas mittels eines Schlagwerks zerkleinert wird. Als nachteilig wird angesehen, daß nur große Flaschen vom Schlagwerk mit Sicherheit zerkleinert werden können.

Aufgabe der vorliegenden Erfindung ist es, einen Altglas-Sammelbehälter der eingangs genannten Art zu schaffen, dessen Zerkleinerungsvorrichtung wesentlich einfacher und energiesparender aufgebaut sein kann und dennoch zu einer eine ausreichende Volumenverringerung bietenden Zerkleinerung der Altglasgegenstände, auch aus schwerem und dickem Glas, führt, wobei auch kleine Flaschen erfaßt werden.

Zur Lösung dieser Aufgabe sind bei einem Altglas-Sammelbehälter der eingangs genannten Art die im Anspruch 1 angegebenen Merkmale vorgesehen.

Durch die erfindungsgemäßen Maßnahmen ist erreicht, daß die Altglasgegenstände in einfacher Weise lediglich zertrümmert werden, was gleichfalls zu der gewünschten erheblichen Volumenverringerung der im Sammelbehälter aufgenommenen Altglasgegenstände führt. Der Energieaufwand für ein derartiges Schlagwerk ist erheblich verringert und führt dennoch auch bei schwerem und dickem Glas zu einer ausreichenden Zerkleinerung. Außerdem ist eine definierte Lage der zu zertrümmernden Altglasgegenstände gegenüber dem Schlagarm des Schlagwerkes erreicht.

Mit den Merkmalen gemäß Anspruch 2 ist erreicht, daß das Schlagwerk auch beim Hineinwerfen von mehreren Altglasgegenständen hintereinander nicht jedes Mal zu- und abgeschaltet wird. Darüber hinaus ergibt sich der Vorteil, daß der Altglasgegenstand tatsächlich auch vollständig zertrümmert wird.

Die Merkmale der Ansprüche 3 und 4 definieren eine bevorzugte Ausführungsform der Querführungselemente und des Schlagarms.

Mit den Merkmalen gemäß Anspruch 5 ist eine gezielte Zertrümmerung der Altglasgegenstände erreicht, da diese für den genannten Vorgang eine bestimmte Ruheposition einnehmen. Sind dabei die Merkmale gemäß Anspruch 6 vorgesehen, so kann ein gezielter Bereich an den Altglasgegenständen, an dem die Zertrümmerung als erstes ansetzen soll, ausgewählt werden, was bspw. bei Flaschen und insbesondere bei Sektflaschen derjenige Bereich ist, der sich an den dicken nach innen gezogenen Bodenbereich der Flasche anschließt. Mit anderen Worten, der Mindestabstand wird bevorzugt so gewählt, daß der oder die Schlagarme des Schlagwerkes mit Sicherheit über dem bei Sektflaschen vorhandenen dicken Boden angreifen.

Durch die Maßnahmen gemäß Anspruch 7 ist erreicht, daß die zertrümmerten Teile der Altglasgegenstände frei wegfallen können.

Sind die Merkmale gemäß Anspruch 8 vorgesehen, wird ein gewisser Schutz gegen ein Nachaußenschlendern von zertrümmerten Glasteilen erreicht.

Zweckmäßigerweise ist das Schlagwerk gemäß Anspruch 9 von einem Elektromotor angetrieben.

Mit den Merkmalen gemäß Anspruch 10 ist erreicht, daß auch dann, wenn der Sammelbehälter mit mehreren Einwurföffnungen versehen ist, ein einziges Schlagwerk ausreichend ist. Dabei ist es zweckmäßig, die Merkmale gemäß Anspruch 11 vorzusehen, so daß im allgemeinen auch ein einziger Schlagarm ausreicht.

Um ggf. auch bisherige Altglas-Sammelbehälter nachrüsten zu können, sind die Merkmale gemäß Anspruch 12 vorgesehen.

Als Sicherheitsmaßnahme dienen die im Anspruch 13 angeführten Merkmale.

Mit den Merkmalen gemäß Anspruch 14 ist in Verbindung mit den Merkmalen des Anspruchs 15 die Möglichkeit der Energieeinsparung gegeben, da das Schlagwerk nur dann zugeschaltet wird, wenn Altglas eingeworfen wird. Die Merkmale gemäß Anspruch 14 sind in Verbindung mit den Merkmalen gemäß Anspruch 16 dazu vorgesehen, metallische Gegenstände zu erfassen und damit ein Verklemmen, Beschädigen oder dgl. des Schlagwerks zu verhindern. Um auch artfremde Gegenstände trotzdem in den Sammelbehälter aufnehmen zu können, wenn sie einmal fälschlicherweise eingeworfen sind, sind die Merkmale gemaß Anspruch 17 vorgesehen.

Kostengünstige Energie zum Betreiben des Schlagwerkes wird dann zur Verfügung gestellt, wenn die Merkmale gemäß Anspruch 18 vorgesehen sind.

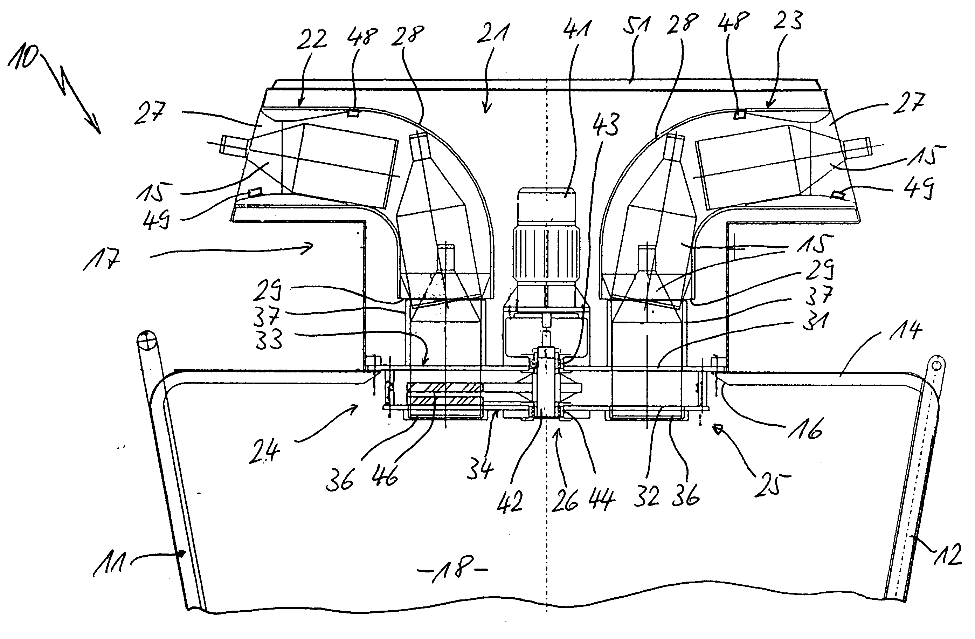

Weitere Einzelheiten der Erfindung sind der folgenden Beschreibung zu entnehmen, in der die Erfindung anhand des in der Zeichnung dargestellten Ausführungsbeispieles näher beschrieben und erläutert ist.

Die einzige Figur zeigt in schematischer längsgeschnittener und teilweise abgebrochener Darstellung einen Altglas-Sammelbehälter gemäß einem bevorzugten Ausführungsbeispiel vorliegender Erfindung.

Ein Altglas-Sammelbehälter 10 an sich üblicher Bauart besitzt bspw. einen etwa rechteckigen horizontalen Querschnitt und gemäß der abgebrochenen zeichnerischen Darstellung einen etwa trapezförmigen Längsschnitt. Zum Entleeren des Sammelbehälters 10 sind im Bereich der Seitenwände 11, 12 nicht weiter bezeichnete Schwenkklappen vorgesehen, die in den Bereich des nicht gezeigten Behälterbodens reichen. Die Deckwand 14 des Sammelbehälters 10 ist mit einer mittigen Ausnehmung 16 versehen, in deren Bereich auf der Deckwand 14 eine kombinierte Einwurf-Zerkleinerungs-Einheit 17 angeflanscht ist.

Die kombinierte Einwurf-Zerkleinerungs-Einheit 17 besitzt innerhalb eines im Längsschnitt etwa T-förmigen Gehäuses 21 zwei diametral gegenüberliegende Einwurfschächte 22, 23 und eine zwei Aufnahmen 24, 25 für Altglasgegenstände 15 zugeordnete Zerkleinerungsvorrichtung in Form eines Schlagwerkes 26.

Die beiden bogenförmigen Einwurfschächte 22 und 23 sind identischer Bauart und einander diametral gegenüberliegend und gegengerichtet angeordnet. Jeder Einwurfschacht 22, 23 besitzt eine Einwurföffnung 27, an die sich ein Führungsrohr 28 nach Art eines Krümmers anschließt. Das Führungsrohr 28 hat einen derartigen Durchmesser und Krümmungsradius, daß Altglasgegenstände 15 in Form von Flaschen üblicher Größe eingebracht und sich längs des bspw. Viertelbogens weiterbewegen können. Während in die Einwurföffnung 27 die Altglasgegenstände 15 horizontal eingebracht werden, werden sie durch den Bogen in eine vertikale Richtung im Bereich der innerhalb des T-förmigen Gehäuses 21 liegenden Ausgangsöffnung 29 des Einwurfschachtes 22, 23 umgelenkt.

Unterhalb jeder Ausgangsöffnung 29 der beiden Einwurfschächte 22 und 23 ist die Aufnahme 24 bzw. 25 vorgesehen, in denen die Altglasgegenstände 15 zerkleinert bzw. zertrümmert werden können. Jede Aufnahme 24, 25 ist durch übereinanderliegende Öffnungen 31, 32 in zueinander parallelen Aufnahmeplatten 33, 44 und durch eine unterhalb der in Einwurfrichtung letzten bzw. unteren Öffnung 32 angeordnete Auflageplatte 36 gebildet. Die Öffnungen 31 und 32 für beide Aufnahmen 24 und 25 sind in einer einzigen Platte 33 bzw. 34 vorgesehen, von denen die in Einwurfrichtung vordere bzw. obere Platte 33 mit der Unterseite des T-förmigen Gehäuses 21 und mit der Deckwand 14 fest verbunden ist, so daß sie quasi die Abdeckung für die Ausnehmung 16 der Deckwand 14 des Sammelbehälters 10 bildet. Die in Einwurfrichtung hintere bzw. untere Platte 34 ist ins Innere des Sammelbehälters 14 hineinragend und von der oberen Platte 13 abgehängt angeordnet. Auf der oberen Platte 33 ist um jede Öffnungen 31 ein ganz- oder teilkreisförmiges Gleitblech 37 zum Führen der Altsglasgegenstände 15 zur Öffnung 31 hin vorgesehen. Die beiden Öffnungen 31 und 32 sind konzentrisch zueinander und in Flucht übereinander angeordnet. Jede unterhalb der unteren Öffnung 32 vorgesehene und von der unteren Platte 34 abgehängte Auflageplatte 36 ist in einem Mindestabstand von der Öffnung 32 angeordnet und deckt diese ab.

Das Schlagwerk 26 besitzt einen Elektromotor 41, dessen Abtriebswelle 42 vertikal angeordnet ist, die in Lagerbuchsen 43 und 44 in der oberen bzw. unteren Platte 33, 34 drehgelagert ist. Der Elektromotor 41 ist auf der oberen Platte 33 angeflanscht und zwischen den beiden Einwurfschächten 22, 23 angeordnet. Auf der Abtriebswelle 42 ist zwischen den beiden Platten 33 und 34 ein Schlagarm 46 drehfest angeordnet, dessen Länge etwa dem Abstand der Achse der Abtriebswelle 42 vom in radialer Richtung gemessenen äußeren Rand der Öffnungen 31, 32 entspricht. Der zwischen den beiden Platten 33 und 34 rotierend antreibbare und den Raum zwischen den übereinanderliegenden Öffnungen 32 und 31 schneidende Schlagarm 46 besitzt eine Dicke, die größer ist als dem halben lichten Abstand der beiden Platten 33 und 34 entspricht.

Die Wirkungsweise der Zertrümmerung der Altglasgegenstände 15 im Altglas-Sammelbehälter 10 ist folgende: Werden gemäß der Zeichnung Altglasgegenstände 15 in Form von bspw. Flaschen in die Einwurföffnung 27 eingebracht, fallen diese Flaschen 15 aufgrund ihres Eigengewichts durch den Einwurfschacht 22, 23 nach unten und in die Öffnungen 31 und 32 der Aufnahme 24 bzw. 25. Beim Ausführungsbeispiel steht die Flasche 15 dann senkrecht auf der Auflageplatte 36. Wird bzw. ist der Elektromotor 41 des Schlagwerks 26 zugeschaltet, rotiert der Schlagarm 46 und schlägt auf die Flasche 15, so daß diese zertrümmert wird. Dabei ist die Auflageplatte 36 in einen derartigen Abstand von der unteren Platte 34 vorgesehen, daß der Schlagarm 46 seitlich auf einen Bereich der Flasche 15 trifft, der oberhalb des üblicherweise und bei Sektflaschen insbesondere schweren und dicken Flaschenbodens trifft. Die Flasche 15 wird zertrümmert. Ein Teil des Glases fällt in den Innenraum 18 des Sammelbehälters 10, der Rest des Oberteils der Flasche fällt nach, wird nochmals zertrümmert, usw.

Gemäß einem nicht dargestellten Ausführungsbeispiel vorliegender Erfindung ist die kombinierte Einwurf-Zerkleinerungs-Einheit 17 mit entweder nur einem Einwurfschacht oder mit mehreren, bspw. vier über den Umfang gleichmäßig verteilt angeordneten Einwurfschächten versehen, wobei jedem Einwurfschacht eine Aufnahme und allen Einwurfschächten bzw. Aufnahmen ein einziges Schlagwerk 26 zugeordnet ist.

Es versteht sich, daß die Einwurfschächte 22, 23 statt bogenförmig auch geradlinig schräg verlaufen können und das Schlagwerk zur Anpassung entsprechend geneigt eingebaut sein kann.

Gemäß einem anderen ebenfalls nicht dargestellten Ausführungsbeispiel vorliegender Erfindung ist die Aufnahme 24 bzw. 25 durch Öffnungen von mehr als zwei übereinander angeordneten Platten gebildet, wobei dann zwischen jeweils zwei übereinander angeordneten Platten ein Schlagarm rotierend umlaufen kann. Mit anderen Worten, das Schlagwerk 26 kann mit zwei oder mehr übereinander angeordneten Schlagarmen versehen sein, so daß ein Altglasgegenstand 15, wie bspw. eine Flasche durch die mehreren Schlagarme auf einmal vollständig zertrümmert werden kann.

Im Bereich der Einwurföffnung 27 des Einwurfschachtes 22, 23 ist eine einen ersten und einen zweiten Sensor 48, 49 aufweisende Sensorvorrichtung vorgesehen. Der erste Sensor 48 ist derart ausgebildet und derart mit einer nicht dargestellten Steuerschaltung verbunden, daß das Schlagwerk 26 bzw. dessen Elektromotor 41 jedes Mal dann zugeschaltet wird, wenn ein Altglasgegenstand 15 in einen der Einwurfschächte 22, 23 eingeworfen wird. Dies kann über die nicht dargestellte Steuerung bspw. zeitverzögert in der Weise erfolgen, daß das Schlagwerk 26 erst nach einer Zeit zuschaltet, die der Zeit entspricht, in der der Altglasgegenstand 15 zur Auflageplatte 36 gelangt ist. Eine zeitverzögerte Abschaltung des Schlagwerks 26 hat den Vorteil, daß eine Reihe von Altglasgegenständen 15 nacheinander eingeworfen werden können, ohne daß das Schlagwerk 26 zwischenzeitlich abschaltet. Der zweite Sensor 49 ist derart ausgebildet, daß er Metallteile detektieren bzw. erfassen kann. Wird ein Metallteil erfaßt, so kann der Sensor 49 über die nicht dargestellte Steuereinheit das Schlagwerk 26 entweder abschalten oder erst gar nicht zuschalten. Um dieses Metallteil aus der Aufnahme 24, 25 beseitigen zu können, ist vorgesehen, daß die Auflageplatte 36 bei Ansprechen des zweiten Sensors 49 aus dem Bereich der fluchtenden Öffnungen 31, 32 ausschwenkbar ist. Zweckmäßigerweise ist der zweite Sensor 49 in Einwurfrichtung vor dem ersten Sensor angeordnet.

Die Spannungsversorgung des Elektromotors 41 des Schlagwerks 26 erfolgt entweder über das Stromversorgungsnetz oder über eine Solaranlage 51, wie sie bspw. auf der Oberseite des T-förmigen Gehäuses 21 anbringbar ist.

Es versteht sich, daß es auch möglich ist, statt des Anflanschens der kombinierten Einwurf-Zerkleinerungs-Einheit 17 auf einem Sammelbehälter den oder die Einwurfschächte, den oder die Aufnahmen und das Schlagwerk innerhalb eines Altglas-Sammelbehälters 10 anzuordnen.

## Patentansprüche

1. Altglas-Sammelbehälter (10), mit mindestens einem Einwurfschacht (22, 23) und mit einer Zerkleinerungsvorrichtung, die an einem der Einwurföffnung (27) des Einwurfschachtes (22, 23) abgewandten Bereich des Sammelbehälters (10) angeordnet ist und durch ein Schlagwerk (26) mit mindestens einem Schlagarm (46) gebildet ist, das an einem eingeworfenen Altglasgegenstand (15) seitlich angreift, und mit einer Aufnahme (24, 25) für die Altglasgegenstände (15) an einem der Einwurföffnung (27) des Einwurfschachtes (22, 23) abgewandten Bereich, dadurch gekennzeichnet, daß die Aufnahme (24, 25) zumindest zwei parallele, übereinander angeordnete Querführungselemente (33, 34) aufweist, die Mittel aufweisen, um eine bestimmte Lage der zu zertrümmernden Altglasgegenstände zu definieren und daß jeweils zwischen zwei übereinander angeordneten Querführungselementen (33, 34) ein Schlagarm (46) des Schlagwerks (26) beweglich angeordnet ist.

2. Sammelbehälter nach Anspruch 1, dadurch gekennzeichnet, daß das Schlagwerk (26) mit einer Steuerung zum zeitverzögerten Zu- bzw. Abschalten versehen ist.

3. Sammelbehälter nach Anspruch 1 oder 2, dadurch gekennzeichnet, daß die Querführungselemente durch zwei parallele, vorzugsweise horizontale Scheiben (33, 34) gebildet sind, von denen jede mit einer dem Außendurchmesser der Altglasgegenstände (15) entsprechenden Durchmesser aufweisende Öffnung (31, 32) versehen ist und zwischen denen ein umlaufender Schlagarm (46) durchläuft.

4. Sammelbehälter nach einem der vorhergehenden Ansprüche, dadurch gekennzeichnet, daß der Schlagarm (46) eine Dicke aufweist, die größer als der halbe lichte Abstand zwischen den Querführungselementen (31, 32) ist.

5. Sammelbehälter nach einem der vorhergehenden Ansprüche, dadurch gekennzeichnet, daß die Aufnahme (24, 25) eine in Einwurfrichtung nach den Querführungselementen (31, 32) vorgesehene Auflageplatte (36) aufweist.

6. Sammelbehälter nach Anspruch 5, dadurch gekennzeichnet, daß die Auflageplatte (36) von dem in Einwurfrichtung letzten Querführungselement (32) einen Mindestabstand aufweist.

7. Sammelbehälter nach einem der vorhergehenden Ansprüche, dadurch gekennzeichnet, daß die Querführungselemente sich an das der Einwurföffnung (27) abgewandte Ende des Einwurfschachtes (22, 23) in einem Abstand anschließen.

8. Sammelbehälter nach einem der vorhergehenden Ansprüche, dadurch gekennzeichnet, daß der Einwurfschacht (22, 23) bogenförmig, vorzugsweise nach Art eines Viertelkreises ist.

9. Sammelbehälter nach einem der vorhergehenden Ansprüche, dadurch gekennzeichnet, daß der Schlagarm (46) von einem Elektromotor (41) rotierend antreibbar ist.

10. Sammelbehälter nach einem der vorhergehenden Ansprüche, dadurch gekennzeichnet, daß das Schlagwerk (26) zwei oder mehr Einwurfschächten (22, 23) bzw. Aufnahmen (24, 25) zugeordnet ist.

11. Sammelbehälter nach Anspruch 10, dadurch gekennzeichnet, daß die Einwurfschächte (22, 23) und Aufnahmen (24, 25) in vorzugsweise gleichmäßigem Abstand im Bereich des oder der umlaufenden Schlagarme (46) des Schlagwerks (26) angeordnet sind.

12. Sammelbehälter nach einem der vorhergehenden Ansprüche, dadurch gekennzeichnet, daß der oder die Einwurfschächte (22, 23), die Aufnahme(n) (24, 25) und das Schlagwerk (26) als Einheit (17) auf dem mit einer zentralen Ausnehmung (16) versehenen Sammelbehälter (10) angeflanscht ist.

13. Sammelbehälter nach einem der vorhergehenden Ansprüche, dadurch gekennzeichnet, daß zwischen der Einwurföffnung (27) am Einwurfschacht (22, 23) und dem Schlagarm (46) des Schlagwerks (26) ein das Eingreifen verhindernder Mindestabstand besteht.

14. Sammelbehälter nach einem der vorhergehenden Ansprüche, dadurch gekennzeichnet, daß der Einwurfschacht (22, 23) im Bereich der Einwurföffnung (27) mit einer Sensorvorrichtung (48, 49) bestückt ist.

15. Sammelbehälter nach Anspruch 14, dadurch gekennzeichnet, daß die Sensorvorrichtung einen ersten Sensor (48) zum Zuschalten des Schlagwerks (26) aufweist.

16. Sammelbehälter nach Anspruch 14 oder 15, dadurch gekennzeichnet, daß die Sensorvorrichtung einen zweiten Sensor (49) zum Detektieren von Metallteilen und ggf. gleichzeitigen Abschalten des Schlagwerks (26) aufweist.

17. Sammelbehälter nach Anspruch 16, dadurch gekennzeichnet, daß die Auflageplatte (36) schwenkbar ausgebildet und vom zweiten Sensor (49) betätigbar ist.

18. Sammelbehälter nach Anspruch 9, dadurch gekennzeichnet, daß der elektrische Antrieb (41) des Schlagwerks (26) von einer mit dem Sammelbehälter (10) verbundenen Solaranlage (51) gespeist ist.

## Claims

1. A collection bin (10) for recycling used glass, having at least one feed chute (22, 23), and having a comminuting device which is disposed in a region of the collection bin (10) remote from the feed opening (27) of the feed chute (22, 23) and is embodied by a beater mechanism (26) with at least one beater arm (46) that laterally engages a used glass article (15) that has been fed in, and having a receptacle (24, 45) for the used glass articles (15) in a region remote from the feed opening (27) of the feed chute (22, 23), characterized in that the receptacle (24, 25) has at least two parallel transverse guidance elements (33, 34), disposed one above the other, which have means for defining a certain position of the used glass articles to be smashed, and that one beater arm (46) of the beater mechanism (26) is movably disposed between two respective transverse guidance elements (33, 34) disposed one above the other.

2. The collection bin of claim 1, characterized in that the beater mechanism (26) is equipped with a controller for turning it on and off in delayed fashion.

3. The collection bin of claim 1 or 2, characterized in that the transverse guidance elements are embodied by two parallel, preferably horizontal disks (33, 34), each of which is provided with an opening (31, 32) whose diameter corresponds to the outside diameter of the used glass articles (15) and between which a revolving beater arm (46) runs.

4. The collection bin of one of the foregoing claims, characterized in that the beater arm (46) has a thickness that is greater than half the inside spacing between the transverse guidance elements (31, 32).

5. The collection bin of one of the foregoing claims, characterized in that the receptacle (24, 25) has a bearing plate (36), which is provided downstream of the transverse guidance elements (31, 32) in the feeding direction.

6. The collection bin of claim 5, characterized in that the bearing plate (36) has a minimum spacing from the last transverse guidance element(32) in the feeding direction.

7. The collection bin of one of the foregoing claims, characterized in that the transverse guidance elements adjoin the end of the feed chute (22, 23) remote from the feed opening (27) in a spaced-apart fashion.

8. The collection bin of one of the foregoing claims, characterized in that the feed chute (22,2 3) is curved, preferably in the manner of a quarter-circle.

9. The collection bin of one of the foregoing claims, characterized in that the beater arm (46) is driven to rotate by an electric motor (41).

10. The collection bin of one of the foregoing claims, characterized in that the beater mechanism (26) is associated with two or more feed chutes (22, 23) or receptacles (24, 25).

11. The collection bin of claim 10, characterized in that the feed chutes (22, 23) and receptacles (24, 25) are disposed with a preferably uniform spacing in the region of the revolving beater arm or arms (46) of the beater mechanism (26).

12. The collection bin of one of the foregoing claims, characterized in that the feed chute or chutes (22, 23), the receptacle or receptacles (24, 25) and the beater mechanism (26) are flanged as a unit (17) to the collection bin (10), the collection bin being provided with a central recess (16).

13. The collection bin of one of the foregoing claims, characterized in that there is a minimum spacing, preventing a person from reaching the beater arm, between the feed opening (27) of the feed chute (22, 23) and the beater arm (46) of the beater mechanism (26).

14. The collection bin of one of the foregoing claims, characterized in that the feed chute (22, 23) is equipped with a sensor arrangement (48, 49) in the region of the feed opening (27).

15. The collection bin of claim 14, characterized in that the sensor arrangement has a first sensor (48) for turning on the beater mechanism (26).

16. The collection bin of claim 14 or 15, characterized in that the sensor arrangement has a second sensor (49) for detecting metal parts and for simultaneously turning off the beater mechanism (26) as needed.

17. The collection bin of claim 16, characterized in that the bearing plate (36) is pivotably embodied and is actuatable by the second sensor (49).

18. The collection bin of claim 9, characterized in that the electrical drive (41) of the beater mechanism (26) is supplied with energy from a solar panel system (51) joined to the collection bin (10).

## Revendications

1. Collecteur de verre de récupération (10), avec au moins un conduit d'introduction (22, 23) et avec un dispositif de broyage disposé dans une zone du collecteur (10) opposée à l'ouverture d'introduction (27) du conduit d'introduction (22, 23), le dispositif de broyage comprenant un mécanisme de percussion (26) avec au moins un bras de percussion (46) agissant latéralement sur un objet en verre de récupération (15) introduit et avec un récepteur (24, 25) pour les objets en verre de récupération (15) dans une zone opposée à l'ouverture d'introduction (27) du conduit d'introduction (22, 23), caractérisé en ce que le récepteur (24, 25) présente au moins deux éléments de guidage transversal (33, 34) parallèles et superposés, disposant de moyens permettant de définir une certaine position des objets en verte à broyer et que entre deux éléments de guidage transversal (33, 34) est disposé de façon mobile respectivement un bras de percussion (46) du mécanisme de percussion (26).

2. Collecteur selon la revendication 1, caractérisé en ce que le mécanisme de percussion (26) est équipé d'une commande pour la mise en et hors service à action retardée.

3. Collecteur selon la revendication 1 ou 2, caractérisé en ce que les éléments de guidage transversal sont formés de deux disques (33, 34) parallèles et de préférence horizontaux, dont chacun est muni d'une ouverture (31, 32) présentant un diamètre correspondant au diamètre extérieur des objets en verte de récupération (15) et entre lesquels passe un bras de percussion (46) rotatif.

4. Collecteur selon l'une des revendications précédentes, caractérisé en ce que le bras de percussion (46) présente une épaisseur supérieure au demi écartement entre les éléments de guidage transversal (31, 32).

5. Collecteur selon l'une des revendications précédentes, caractérisé en ce que le récepteur (24, 25) présente une plaque d'assise (36) prévue en aval des éléments de guidage transversal (31, 32) dans le sens de l'introduction.

6. Collecteur selon la revendication 5, caractérisé en ce que la plaque d'assise (36) présente un écart minimal du dernier élément de guidage transversal (32) dans le sens de la direction d'introduction.

7. Collecteur selon l'une des revendications précédentes, caractérisé en ce que les éléments de guidage transversal sont rattachés avec un certain écart à l'extrémité du conduit d'introduction (22, 23) opposée à l'ouverture d'introduction (27).

8. Collecteur selon l'une des revendications précédentes, caractérisé en ce que le conduit d'introduction (22, 23) est arqué, de préférence en forme d'un quart de cercle.

9. Collecteur selon l'une des revendications précédentes, caractérisé en ce que le bras de percussion (46) peut être entraîné en rotation par un électromoteur.

10. Collecteur selon l'une des revendications précédentes, caractérisé en ce que le mécanisme de percussion (26) est coordonné à deux ou plusieurs conduits d'introduction (22, 23) ou récepteurs (24, 25).

11. Collecteur selon la revendication 10, caractérisé en ce que les conduits d'introduction (22, 23) et récepteurs (24, 25) sont disposés de préférence à un écart régulier dans la zone du ou des bras de percussion rotatifs (46) du mécanisme de percussion (26).

12. Collecteur selon l'une des revendications précédentes, caractérisé en ce que le ou les conduits d'introduction (22, 23), le(s) récepteur(s) (24, 25) et le mécanisme de percussion (26) sont bridés comme unité (17) sur le collecteur (10) pourvu d'un évidement central (16).

13. Collecteur selon l'une des revendications précédentes, caractérisé en ce que entre l'ouverture d'introduction (27) sur le conduit d'introduction (22, 23) et le bras de percussion (46) du mécanisme de percussion (26) existe un écart minimal évitant d'y accéder avec le bras.

14. Collecteur selon d'une des revendications précédente, caractérisé en ce que le conduit d'introduction (22, 23) est équipé dans la zone de l'ouverture d'introduction (27) d'un dispositif de palpage (48, 49).

15. Collecteur selon la revendication 14, caractérisé en ce que le dispositif de palpage présente un premier palpeur (48) pour la mise en circuit du mécanisme de percussion (26).

16. Collecteur selon la revendication 14 ou 15, caractérisé en ce que le dispositif de palpage présente un deuxième palpeur (49) pour détecter des pièces métalliques et éventuellement mettre simultanément le mécanisme de percussion (26) hors service.

17. Collecteur selon la revendication 16, caractérisé en ce que la plaque d'assise (36) est pivotable et peut être actionnée par le deuxième palpeur (49).

18. Collecteur selon la revendication 9, caractérisé en ce que l'entraînement électrique (41) du mécanisme de percussion (26) est alimenté par une installation solaire (51) relié au collecteur (10).
